(19) Europäisches Patentamt
European Patent Office
Office européen des brevets

(11) **EP 2 068 173 B1**

(12) **EUROPÄISCHE PATENTSCHRIFT**

(45) Veröffentlichungstag und Bekanntmachung des Hinweises auf die Patenterteilung:
**30.03.2011 Patentblatt 2011/13**

(21) Anmeldenummer: **08105548.5**

(22) Anmeldetag: **10.10.2008**

(51) Int Cl.:
*G01S 13/93* $^{(2006.01)}$     *G01S 17/93* $^{(2006.01)}$

(54) **Verfahren zur Messung von Querbewegungen in einem Fahrerassistenzsystem**

Method for measuring cross movements in a driver assist system

Procédé destiné à la mesure de mouvements obliques dans un système d'assistance au conducteur

(84) Benannte Vertragsstaaten:
**DE FR GB IT**

(30) Priorität: **04.12.2007 DE 102007058242**

(43) Veröffentlichungstag der Anmeldung:
**10.06.2009 Patentblatt 2009/24**

(73) Patentinhaber: **Robert Bosch GmbH**
**70442 Stuttgart (DE)**

(72) Erfinder:
• **Jordan, Ruediger**
**70192, Stuttgart (DE)**
• **Schwindt, Oliver**
**48331, Farmington Hills (DE)**

(56) Entgegenhaltungen:
EP-A- 1 788 408    WO-A-96/31783
WO-A-03/031228    DE-A1- 19 806 687
US-A- 5 314 037    US-A1- 2005 156 780

**Beschreibung**

Stand der Technik

Die Erfindung betrifft ein Verfahren zur Bestimmung einer für eine Querbewegung eines georteten Objekts repräsentativen dynamischen Größe in einem Fahrerassistenzsystem für Kraftfahrzeuge, das zur Ortung des Objekts zwei seitlich versetzt zueinander angeordnete winkelauflösende Abstandssensoren aufweist, mit denen auch eine Radialkomponente der Relativgeschwindigkeit des Objekts längs des jeweiligen Sehstrahls meßbar ist.

Beispiele für Fahrerassistenzsysteme, in denen die Erfindung Anwendung findet, sind etwa sogenannte ACC-Systeme (Adaptive Cruise Control), die eine automatische Regelung des Abstands zu einem vorausfahrenden Fahrzeug (dem Objekt) erlauben, sowie prädiktive Sicherheitssysteme (PSS), die dazu dienen, eine unmittelbar bevorstehende Kollision automatisch zu erkennen, so daß Maßnahmen zur Abwendung der Kollision oder zur Milderung der Kollisionsfolgen eingeleitet werden können.

Eine genaue Kenntnis der Querbewegungen des Objekts ist beispielsweise in den Fällen bedeutsam, in denen ein Einscherendes Fahrzeug, von dem eine erhöhte Kollisionsgefahr ausgeht, möglichst frühzeitig erkannt werden soll oder umgekehrt eine möglichst frühzeitige Erkennung von abbiegenden oder aus der eigenen Spur ausscherenden Fahrzeugen erforderlich ist, damit das eigene Fahrzeug nicht unnötig stark verzögert wird und/oder früher wieder beschleunigen kann.

Als Beispiel für dynamische Größen, die für die Querbewegung eines Objekts repräsentativ sind, können insbesondere die Querkomponente der Geschwindigkeit (in der Richtung quer zur Fahrbahn) sowie die Giergeschwindigkeit des Objekts genannt werden. Die Giergeschwindigkeit ist deshalb bedeutsam, weil sie eine frühzeitige Abschätzung der künftigen Bewegungsrichtung und damit der Quergeschwindigkeit des Objekts erlaubt.

Herkömmliche Fahrerassistenzsysteme weisen zur Ortung vorausfahrender Fahrzeuge und sonstiger Objekte üblicherweise einen winkelauflösenden, langreichweitigen Radarsensor (LRR; Long Range Radar) auf, mit dem der Abstand und die Relativgeschwindigkeit oder, genauer, die Radialkomponente der Relativgeschwindigkeit relativ genau gemessen werden können. Das Winkelauflösungsvermögen des Radarsensors erlaubt darüber hinaus zumindest eine grobe Abschätzung des Azimutwinkels, so daß zusammen mit der Abstandsinformation die Position des Objekts in einem zweidimensionalen Koordinatensystem bestimmt werden kann. Aufgrund des begrenzten Winkelauflösungsvermögens ist die Genauigkeit bei der Bestimmung der lateralen Position (y-Position) des Objekts jedoch deutlich schlechter als die Genauigkeit bei der Bestimmung des Abstands.

Eine direkte Messung der Querkomponente der Geschwindigkeit des Objekts ist nicht möglich. Diese Größe kann deshalb nur indirekt bestimmt werden, indem die Lateralpositionen des Objekts über einen gewissen Zeitraum hinweg verfolgt und nach der Zeit differenziert werden. Die unvermeidlichen Ungenauigkeiten bei der Messung der lateralen Position des Objekts werden bei der Berechnung der zeitlichen Ableitung noch weiter verstärkt, so daß die Ergebnisse mit einem erheblichen Meßrauschen behaftet sind, das sich auch durch Filterung der Daten nicht ganz unterdrücken läßt. Die Berechnung der zeitlichen Ableitung und die Filterprozeduren führen außerdem dazu, daß die Daten für die Quergeschwindigkeit des Objekts erst verhältnismäßig spät zur Verfügung stehen.

Aus DE 199 49 409 A1 ist ein Fahrerassistenzsystem bekannt, bei dem zur Ortung von Objekten im Vorfeld des Fahrzeugs zwei kurzreichweitige Radarsensoren (SRR; Short Range Radar) eingesetzt werden, die nur Abstände und Relativgeschwindigkeiten aber keine Azimutwinkel messen. Da die beiden Sensoren jedoch seitlich versetzt zueinander angeordnet sind, läßt sich die laterale Position des Objekts zumindest näherungsweise durch Triangulation anhand der Abstandsdaten bestimmen. Die Quergeschwindigkeit kann auch hier nur durch Differenzieren nach der Zeit bestimmt werden.

DE 10 2004 028 822 A1 beschreibt ein Fahrerassistenzsystem mit einem "scannenden" Abstandssensor, beispielsweise einem Radar-oder Lidar-Sensor, mit dem die Rückfront eines vorausfahrenden Fahrzeugs abgetastet werden kann, so daß man Abstandsdaten für mehrere Punkte an der Rückfront des Objekts erhält, wobei die jeweils zugehörigen Azimutwinkel bekannt sind. Unter der Annahme, daß die Reflexpunkte, von denen man diese Abstandsdaten erhält, annähernd auf einer Geraden liegen, die rechtwinklig zur Längsachse und damit zur Fortbewegungsrichtung des Objekts orientiert ist, wird dann aus den Abstandsdaten die Orientierung des Objekts und anhand dieser dann die Quergeschwindigkeit des Objekts bestimmt. Auch bei diesem Verfahren ist die Genauigkeit maßgeblich vom Winkelauflösungsvermögen des Sensors abhängig.

Aus US 5 314 037 A ist ein Verfahren nach dem Oberbegriff des Anspruchs 1 bekannt.

Offenbarung der Erfindung

Aufgabe der Erfindung ist es, ein Verfahren für Fahrerassistenzsysteme anzugeben, das eine schnelle und genaue Bestimmung der Giergeschwindigkeit eines georteten Objekts erlaubt.

Diese Aufgabe wird mit den in Anspruch 1 angegebenen Merkmalen gelöst.

Das erfindungsgemäße Verfahren setzt voraus, daß zwei Abstandssensoren vorhanden sind, die in einem gewissen seitlichen Abstand zueinander am eigenen Fahrzeug angeordnet sind und von denen jeder in der Lage ist, die Radialkomponente der Relativgeschwindigkeit des Objekts zu messen, wobei mit "Radialkomponente" jeweils die Geschwindigkeitskomponente längs des Sehstrahls von dem betreffenden Sensor zum Objekt gemeint ist. Wie in der Beschreibung der Ausführungsbeispiele noch näher erläutert werden wird, werden die so gemessenen Radialkomponenten aufgrund verschiedener Effekte durch dynamische Größen beeinflußt, die für die Querbewegung des Objekts repräsentativ sind, insbesondere durch die Quergeschwindigkeit und die Giergeschwindigkeit des Objekts, und diese Einflüsse führen insbesondere dazu, daß die beiden Sensoren unterschiedliche Werte für die Radialkomponente der Relativgeschwindigkeit messen. Anhand dieser Unterschiede kann dann auf die Querbewegung des Objekts zurückgeschlossen werden. Ein wesentlicher Vorteil dieses Verfahrens besteht darin, daß die Messung der Querbewegung maßgeblich auf der Auswertung von Relativgeschwindigkeiten beruht, die mit Hilfe von Radarsensoren sehr genau gemessen werden können. Außerdem lassen sich diese Größen direkt in eine Giergeschwindigkeit des Objekts umrechnen, ohne daß noch einmal nach der Zeit differenziert werden muß. Die gesuchte dynamische Größe steht daher unverzüglich zur Verfügung, und die erhaltenen Daten haben auch ohne zeitraubende Filterung bereits eine relativ hohe Qualität.

Das geortete Objekt wird als ausgedehntes Objekt betrachtet und es wird angenommen, daß die beiden Abstandssensoren Signale von zwei verschiedenen Reflexpunkten an dem Objekt erhalten. In dem Fall kann die Giergeschwindigkeit des Objekts zu Unterschieden in den gemessenen Radialkomponenten führen.

Unter der Annahme, daß die Sehstrahlen von den Sensoren zu den zugehörigen Reflexpunkten am Objekt annähernd parallel verlaufen und folglich die Unterschiede in den gemessenen Radialkomponenten der Geschwindigkeit kaum durch die Quergeschwindigkeit des Objekts verursacht sein können, läßt sich anhand der Differenz der gemessenen Radialkomponenten und des Abstands der Reflexpunkte die Giergeschwindigkeit des Objekts bestimmen.

Dies ist besonders vorteilhaft für eine frühzeitige Erkennung von abbiegenden Fahrzeugen, weil ein vorausfahrendes Fahrzeug, das konstant in der eigenen Spur bleibt, eine Giergeschwindigkeit nahe null haben wird, während in der Anfangsphase eines Abbiegevorgangs, sobald der Fahrer dieses Fahrzeugs das Lenkrad einschlägt, die Giergeschwindigkeit abrupt zunimmt. Erst infolge dieser Giergeschwindigkeitsänderung kommt es dann auch zu einer Änderung in der Quergeschwindigkeit. Die Erfindung hat daher den Vorteil, daß sie es erlaubt, Abbiege-oder Ausschervorgänge von vorausfahrenden Fahrzeugen schon im Ansatz zu erkennen.

Durch Integration der Giergeschwindigkeit über die Zeit läßt sich dann auch die aktuelle Orientierung des Objekts bestimmen, aus der dann wieder die Quergeschwindigkeit berechnet werden kann.

Sofern andererseits bei einem ausgedehnten Objekt die beiden Reflexpunkte relativ nahe beieinander liegen, kann man den Einfluß der Giergeschwindigkeit vernachlässigen und dann wie bei einem punktförmigen Objekt die Unterschiede in den gemessenen Radialkomponenten der Relativgeschwindigkeit direkt in eine Quergeschwindigkeit umrechnen.

Eine vorteilhafte Weiterbildung der Erfindung ist in Anspruch 2 angegeben.

Ein Fahrerassistenzsystem, in dem das erfindungsgemäße Verfahren implementiert ist, ist Gegenstand des unabhängigen Erzeugnisanspruchs.

Die oben dargestellten Verfahren zur Auswertung der Daten bei einem ausgedehnten Objekt beruhen auf verschiedenen Annahmen, die in der Praxis zumeist nur näherungsweise erfüllt sein werden. Es ist jedoch möglich, die auf verschiedenen idealisierenden Annahmen beruhenden Auswertungsverfahren parallel durchzuführen und dann aus den so erhaltenen Werten für die gewünschten dynamischen Größen gewichtete Mittelwerte zu bilden, wobei die Gewichtung davon abhängig sein wird, wie realistisch die betreffenden idealisierenden Annahmen in der jeweiligen Situation sind.

Gemäß einer Ausführungsform des erfindungsgemäßen Verfahrens wird anhand geometrischer Modelle und/ oder empirischer Daten direkt eine Beziehung zwischen den Unterschieden in den gemessenen Radialkomponenten der Relativgeschwindigkeit und einem Wahrscheinlichkeitsparameter aufgestellt, der die Wahrscheinlichkeit für einen Abbiegevorgang und/oder Spurwechsel angibt. Auch dieser Wahrscheinlichkeitsparameter ist eine für die Querbewegung des Objekts repräsentative dynamische Größe im Sinne dieser Erfindung.

Kurze Beschreibung der Zeichnungen

Ausführungsbeispiele der Erfindung sind in den Zeichnungen dargestellt und in der nachfolgenden Beschreibung näher erläutert.

Es zeigen:

Fig. 1 Eine Skizze eines mit einem Fahrerassistenzsystem ausgerüsteten Fahrzeugs bei der Ortung eines annähernd punktförmigen Objekts;

Fig. 2    ein Vektordiagramm zu Fig. 1;

Fig. 3    eine Skizze des Fahrzeugs nach Fig. 1 bei der Ortung eines ausgedehnten Objekts; und

Fig. 4    eine Kennlinie zur Bestimmung eines Wahrscheinlichkeitsparameters gemäß einer Ausführungsform des erfindungsgemäßen Verfahrens.


Ausführungsformen der Erfindung

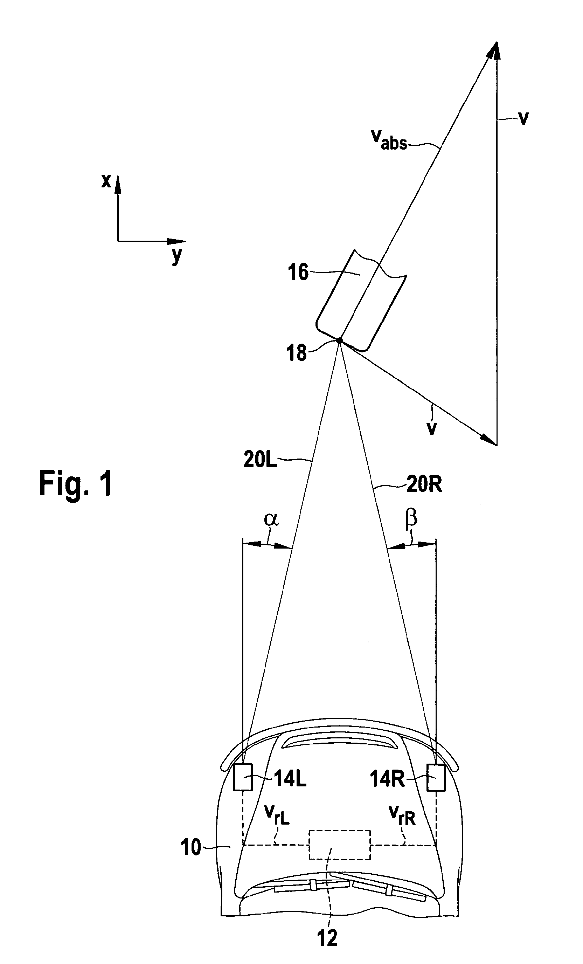

In Fig. 1 ist schematisch die Frontpartie eines Kraftfahrzeugs 10 dargestellt, das mit einem Fahrerassistenzsystem 12, beispielsweise einem ACC-System ausgerüstet ist. Zu diesem Fahrerassistenzsystem gehören zwei winkelauflösende Abstandssensoren 14L und 14R, die in der Nähe der linken und rechten seitlichen Begrenzungen des Fahrzeugs 10 in der Frontpartie desselben eingebaut sind, so daß sie gemeinsam das Vorfeld des Fahrzeugs 10 überwachen. Beispielsweise handelt es sich bei den Abstandssensoren 14L und 14R um langreichweitige Radarsensoren (LRR).

Im gezeigten Beispiel wird ein annähernd punktförmiges Objekt 16, beispielsweise das rückwärtige Ende eines vorausfahrenden Zweirads, von beiden Abstandssensoren 14L und 14R geortet. Etwas idealisierend kann angenommen werden, daß beide Sensoren Radarechos von einem einzigen Reflexpunkt 18 an der Rückfront des Objekts 16 empfangen. Demgemäß mißt der linke Abstandssensor 14L einen Wert für den Abstand zwischen dem Reflexpunkt 18 und diesem Abstandssensor sowie einen Wert für die Radialkomponente $v_{rL}$ der Relativgeschwindigkeit des Objekts 16, d. h., der Relativgeschwindigkeitskomponente in der Richtung parallel zu dem Sehstrahl 20L, der den Radarsensor 14L mit dem Reflexpunkt 18 verbindet. Außerdem mißt der Abstandssensor 14L aufgrund seines Winkelauflösungsvermögens auch den Azimutwinkel $\alpha$ zwischen der Vorwärts-Richtung des Fahrzeugs 10 und dem Sehstrahl 20L.

Entsprechend mißt der rechte Abstandssensor 14R den Abstand zwischen diesem Sensor und dem Reflexpunkt 18, die Radialkomponente $v_{rR}$ der Relativgeschwindigkeit des Objekts 16 längs des Sehstrahls 20R, sowie den Azimutwinkel $\beta$ zwischen diesem Sehstrahl und der Vorwärtsrichtung.

Die Vorwärtsrichtung des Fahrzeugs 10 definiert ein Koordinatensystem mit der in Fahrrichtung dieses Fahrzeugs verlaufenden Achse x und der rechtwinklig dazu verlaufenden Achse y. Für das Objekt 16 ist ein Vektordiagramm eingezeichnet, das die Absolutgeschwindigkeit $V_{abs}$ dieses Objekts sowie dessen Relativgeschwindigkeit v relativ zum Fahrzeug 10 angibt. Die Differenz zwischen Absolut- und Relativgeschwindigkeit ist die Eigengeschwindigkeit V des Fahrzeugs 10.

Es soll nun ein Verfahren beschrieben werden, mit dem es möglich ist, anhand der Daten der Abstandssensoren 14L und 14R einen relativ genauen Wert für den Vektor der Relativgeschwindigkeit v des Objekts 16 zu erhalten, insbesondere auch einen relativ genauen Wert für die relative Quergeschwindigkeit des Objekts 16, d. h., für die y-Komponente $v_y$ des Vektors v.

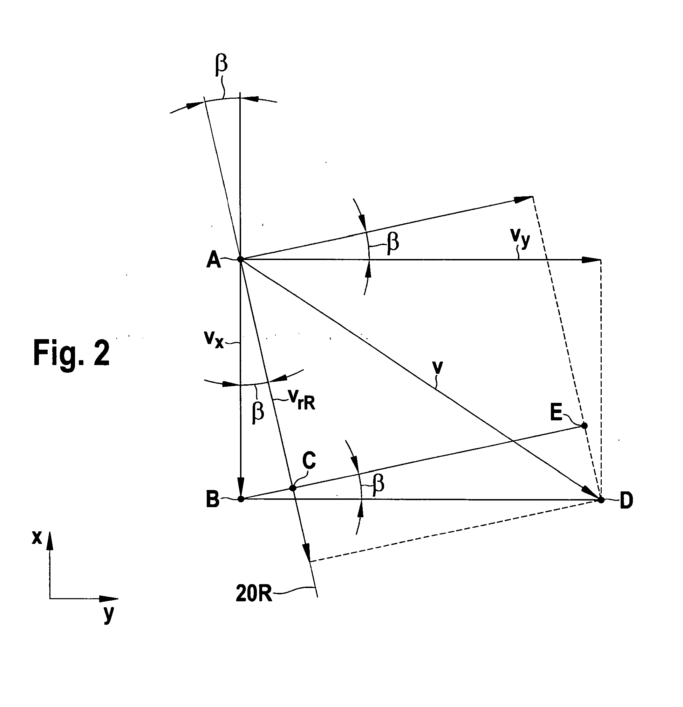

In Fig. 2 ist die Relativgeschwindigkeit v in ihre Komponenten $v_x$ und $v_y$ zerlegt. Dargestellt sind außerdem der Sehstrahl 20R vom rechten Abstandssensor 14R in Fig. 1, also der Sehstrahl, der mit der Vorwärts-Richtung den Winkel $\beta$ bildet, sowie die Radialkomponente $v_{rR}$ der Relativgeschwindigkeit längs dieses Sehstrahls.

In Fig. 2 erkennt man ein rechtwinkliges Dreieck A, B, C, dessen Hypothenuse die x-Komponente $v_x$ der Relativgeschwindigkeit ist. Dieses Dreieck enthält den Winkel $\beta$, und dessen Ankathete ist ein Stück des Vektors, der die Radialkomponente $v_{rR}$ repräsentiert.

Weiterhin erkennt man ein rechtwinkliges Dreieck B, D, E, mit der Quergeschwindigkeit $v_y$ als Hypothenuse. Auch dieses Dreieck enthält den Winkel $\beta$, und dessen Gegenkathete (Strecke D - E) stimmt überein mit dem fehlenden Bestandteil der Radialkomponente $v_{rR}$. Hieraus folgt:

$$v_{rR} = v_y * \sin \beta + v_x * \cos \beta \qquad\qquad (1)$$

Entsprechend erhält man für den Sehstrahl 20L:

$$v_{rL} = v_y * \sin \alpha + v_x * \cos \alpha \qquad\qquad (2)$$

Insgesamt erhält man so die Matrixgleichung:

$$\begin{pmatrix} v_{rL} \\ v_{rR} \end{pmatrix} = \begin{pmatrix} \sin \alpha & \cos \alpha \\ \sin \beta & \cos \beta \end{pmatrix} * \begin{pmatrix} v_x \\ v_y \end{pmatrix} = M * \begin{pmatrix} v_x \\ v_x \end{pmatrix} \qquad (3)$$

Um die gesuchten Größen $v_y$ und $v_x$ zu erhalten, braucht nur noch die Matrix M in bekannter Weise invertiert zu werden:

$$\begin{pmatrix} v_x \\ v_y \end{pmatrix} = (\sin(\alpha-\beta))^{-1} * \begin{pmatrix} \cos \beta & -\cos \alpha \\ -\sin \beta & \cos \alpha \end{pmatrix} * \begin{pmatrix} v_{rL} \\ v_{rR} \end{pmatrix} \qquad (4)$$

Auf diese Weise erhält man aus den gemessenen Azimutwinkeln $\alpha$ und $\beta$ und den gemessenen Radialkomponenten $v_{rL}$ und $v_{rR}$ die vektorielle Relativgeschwindigkeit v des Objekts 16 und damit insbesondere auch dessen Quergeschwindigkeit $v_y$, und dies auf direktem Wege, ohne den Umweg über eine zeitliche Ableitung der y-Ortskoordinate (Lateralposition) des Reflexpunktes 18.

Diese Berechnungen werden in einem elektronischen Rechner ausgeführt, der Teil des Fahrerassistenzsystems 12 ist.

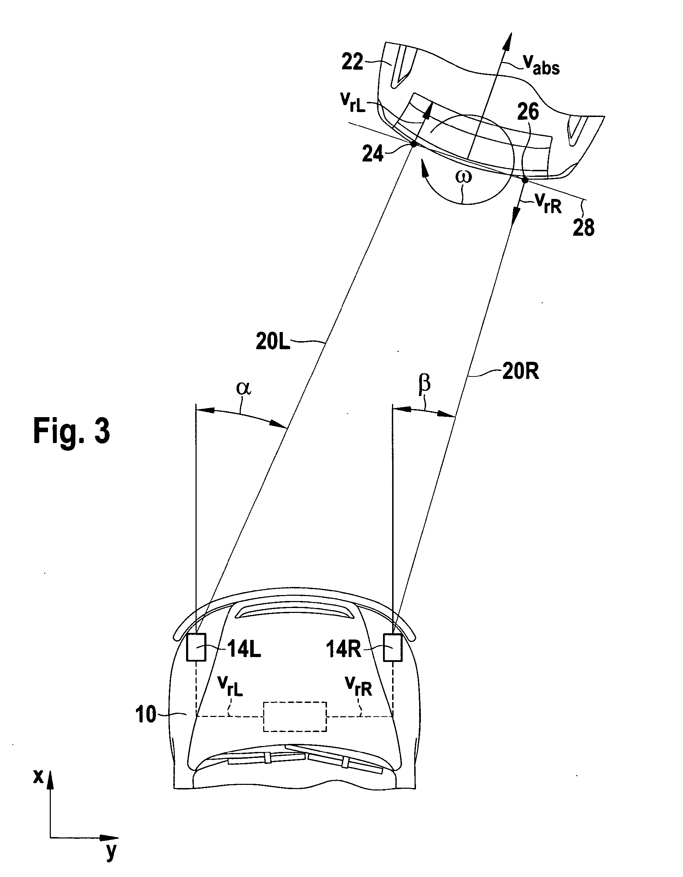

Fig. 3 zeigt eine Skizze ähnlich Fig. 1, bei der jedoch von den beiden Abstandssensoren 14L, 14R anstelle eines annähernd punktförmigen Objekts ein ausgedehntes Objekt 22 geortet wird, beispielsweise die Rückfront eines vorausfahrenden PKW. Der linke Abstandssensor 14L empfängt in diesem Fall ein Radarecho von einem Reflexpunkt 24, während der rechte Abstandssensor 14R ein Echo von einem anderen Reflexpunkt 26 empfängt. Die Lage der Reflexpunkte 24, 26 ist durch die Bedingung bestimmt, daß an diesen Punkten das Einfallslot auf die Rückfront des Objekts 22 mit dem Sehstrahl 20L bzw. 20R zusammenfällt. Die Reflexpunkte 24 und 26 liegen auf einer Geraden 28, die der Rückfront des Objekts 22 entspricht, und der Abstand zwischen den Reflexpunkten 24, 26 ist nur wenig kleiner als die Breite des Objekts 22 und unterscheidet sich auch nur wenig von dem Abstand zwischen den beiden Abstandssensoren 14L, 14R des Fahrzeugs 10.

Aus diesem Grund verlaufen in diesem Fall die beiden Sehstrahlen 20L und 20R nahezu parallel zueinander. Sofern das Objekt 22 keine Gierbewegung ausführt, sind deshalb die gemessenen Radialkomponenten $v_{rL}$ und $v_{rR}$ annähernd gleich, und sie stimmen überein mit dem Betrag der Relativgeschwindigkeit des Objekts 22. Im gezeigten Beispiel wird jedoch angenommen, daß das Objekt 22 (beispielsweise aufgrund eines Lenkeinschlags) eine Gierbewegung mit der Winkelgeschwindigkeit $\omega$ ausführt, mit der Folge, daß die vom linken Abstandssensor gemessene Radialkomponente $v_{rL}$ größer und die vom rechten Abstandssensor gemessene Radialkomponente $v_{rR}$ entsprechend kleiner ist.

In diesem Fall lassen sich Aussagen über die Querbewegung des Objekts 22 auf folgende Weise gewinnen.

Da mit den Abstandssensoren 14L und 14R die Abstände zu den jeweiligen Reflexpunkten 24 und 26 relativ genau gemessen werden können und, etwas weniger genau, auch die entsprechenden Azimutwinkel $\alpha$ und $\beta$ gemessen werden können, läßt sich die Lage der Reflexpunkte 24, 26 im x-y-Koordinatensystem bestimmen. Damit ist auch die Lage der Geraden 28 bestimmt, und wenn man annimmt, daß es sich bei dem ausgedehnten Objekt 22 um ein fahrendes Fahrzeug handelt, so wird die Fahrtrichtung dieses Fahrzeugs die Richtung rechtwinklig zu der Geraden 28 sein. Damit ist die Richtung des Vektors bekannt, der die Absolutgeschwindigkeit $v_{abs}$ des Objekts 22 angibt, jedoch noch nicht der Betrag dieses Vektors.

Im gezeigten Beispiel sind die Radialkomponenten $v_{rL}$ und $v_{rR}$ annähernd entgegengesetzt gleich, was bedeutet, daß ihr Mittelwert, der die Radialkomponente der Relativgeschwindigkeit des Objekts 22 als Ganzes angibt, annähernd null ist. In dem Fall muß der Betrag von $v_{abs}$ gleich der Komponente der Eigengeschwindigkeit V des Fahrzeugs 10 sein, die zu dem Vektor $v_{abs}$ parallel ist. Aus dem bekannten Betrag der Eigengeschwindigkeit V und der bekannten Lage der Geraden 28 läßt sich diese Komponente rechnerisch bestimmen. Damit ist dann der Vektor $v_{abs}$ bekannt. Durch Subtraktion der Eigengeschwindigkeit V erhält man die vektorielle Relativgeschwindigkeit v und damit auch deren Komponenten $v_y$ und $v_x$.

Wenn der Mittelwert der Radialkomponenten $v_{rL}$ und $v_{rR}$ nicht null ist, so bedeutet dies, daß sich das Objekt 22 relativ zum Fahrzeug 10 längs der nahezu parallelen Sehstrahlen 20L und 20R bewegt, und der Mittelwert der Radialkomponenten $v_{rL}$ und $v_{rR}$ läßt sich als Vektor darstellen, der diese Relativbewegung beschreibt. Auch dieser Vektor läßt sich ebenso wie die Eigengeschwindigkeit V in eine Komponente parallel zu $v_{abs}$ und eine dazu rechtwinklige Komponente zerlegen, und der Betrag von $v_{abs}$ ist dann die Summe der Parallelkomponenten der Relativgeschwindigkeit und der Eigengeschwindigkeit V.

Dieses Verfahren wird um so genauer sein, je weiter die Reflexpunkte 24 und 26 auseinander liegen, und je weniger sich die Azimutwinkel $\alpha$ und $\beta$ unterscheiden. Wenn andererseits, abhängig von der Kontur der Rückfront des Objektes 22, die Reflexpunkte 24, 26 relativ nahe beieinander liegen sollten, so wird die Bestimmung der Lage der Geraden 28 unsicherer, doch wird dann andererseits auch der Einfluß der Giergeschwindigkeit $\omega$ so klein, daß er vernachlässigt werden kann. Außerdem werden dann die Azimutwinkel $\alpha$ und $\beta$ deutlich voneinander verschieden sein, so daß man genauere Ergebnisse erhält, wenn man die Geschwindigkeitskomponenten $v_y$ und $v_x$ gemäß Gleichung (4) berechnet.

Es ist auch möglich, beide Berechnungsweisen parallel anzuwenden und die Ergebnisse dann je nach Abstand der Reflexpunkte unterschiedlich zu gewichten.

Eine weitere nützliche Information liefert die direkte Auswertung der Differenz $v_{rL}$ - $v_{rR}$ der Radialkomponenten. Wenn man diese durch den bekannten Abstand zwischen den Reflexpunkten 24 und 26 dividiert, erhält man nämlich unmittelbar die Giergeschwindigkeit $\omega$ des Objekts 22.

Dies erlaubt zum einen eine Kontrolle der Ergebnisse der zuvor geschilderten Berechnungen für die Geschwindigkeitskomponenten $v_y$ und $v_x$. Wenn man nämlich aus diesen und der Eigengeschwindigkeit V den Vektor der Absolutgeschwindigkeit $v_{abs}$ des Objekts 22 rekonstruiert und über mehrere Meßzyklen verfolgt, so müssen die von dem Vektor $v_{abs}$ eingenommenen Richtungen mit dem Zeitintegral der Giergeschwindigkeit $\omega$ übereinstimmen. Abweichungen aufgrund von Meßungenauigkeiten sind jedoch möglich, weil die Meßgrößen in die Berechnung von $\omega$ einerseits und die Berechnung der Richtung von $v_{abs}$ andererseits in unterschiedlicher Weise einfließen. Das Vorhandensein oder Nichtvorhandensein solcher Abweichungen gibt deshalb Aufschluß über die Genauigkeit der Messungen.

In einer typischen Verkehrssituation wird ein vorausfahrendes Fahrzeug (das Objekt 22) über einen längeren Zeitraum hinweg von dem Fahrerassistenzsystem des Fahrzeugs 10 verfolgt. Auf gerader Strecke wird dabei die Giergeschwindigkeit $\omega$ nahezu null sein. Wenn jedoch das Objekt 22 in eine Nebenstraße abbiegt oder auf eine Nebenspur wechselt, so wird dies immer durch einen Lenkvorgang eingeleitet, der unmittelbar zu einer nichtverschwindenden Giergeschwindigkeit $\omega$ führt. Diese Zunahme der Giergeschwindigkeit kann mit dem oben beschriebenen Verfahren ohne Verzögerung detektiert werden. Erst im weiteren Verlauf des Abbiege- oder Spurwechselvorgangs wird sich dann auch eine meßbare Richtungsänderung der Absolutgeschwindigkeit $V_{abs}$ ergeben, und die entsprechenden Messungen können zur Verifizierung des erkannten Abbiege- oder Spurwechselvorgangs dienen.

Die direkte Messung und Auswertung der Giergeschwindigkeit $\omega$ erlaubt somit eine besonders frühe Erkennung von Abbiege- und Spurwechselvorgängen. Dies gilt nicht nur für Spurwechselvorgänge, bei denen das vorausfahrende Fahrzeug von der eigenen Spur auf eine Nebenspur wechselt, sondern auch für Einschervorgänge, bei denen das vorausfahrende Fahrzeug von einer Nebenspur auf die eigene Spur wechselt.

Den oben mit Bezug auf Fig. 1 und 2 einerseits und Fig. 3 andererseits beschriebenen Verfahren ist gemeinsam, daß die Differenz $v_{rL}$ - $v_{rR}$ der Radialkomponenten größer wird, wenn sich das Objekt 16 oder 22 bei einem beginnenden Abbiege- oder Spurwechselvorgang nach rechts wendet, und kleiner wird, wenn sich das Objekt nach links wendet. Deshalb ist es möglich, durch mathematische Analyse typischer Verkehrssituationen und/oder durch Versuche unmittelbar eine Beziehung zwischen der Differenz $v_{rL}$ - $v_{rR}$ der Radialkomponenten und der Abbiege- oder Spurwechselwahrscheinlichkeit des Objekts herzustellen.

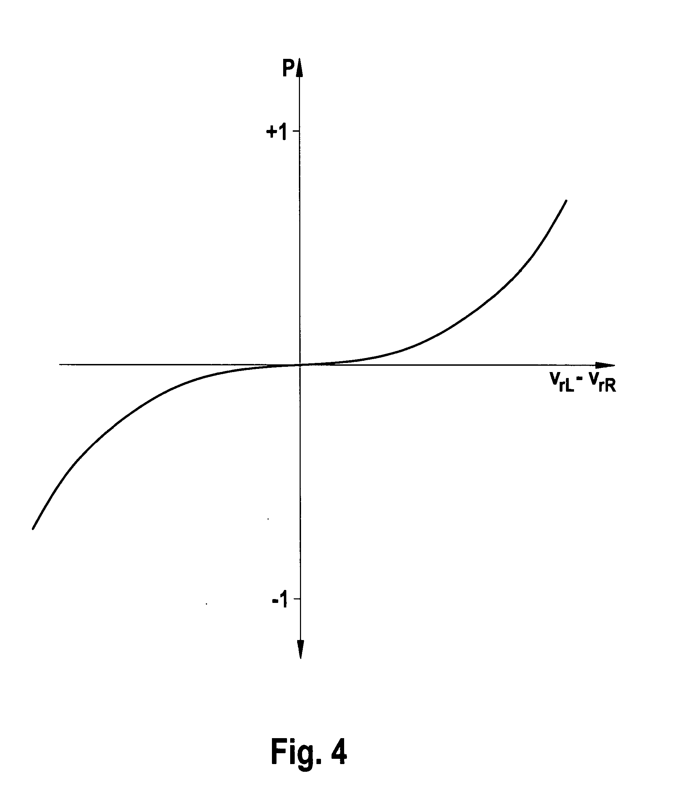

Ein Beispiel einer solchen Beziehung ist in Fig. 4 dargestellt. Dort ist ein Wahrscheinlichkeitsparameter P gegen die Differenz $v_{rL}$ †- $v_{rR}$ aufgetragen. Die Abbiegewahrscheinlichkeit variiert zwischen 0 und +1 und wird durch den Betrag von P angegeben. Daß Vorzeichen von P gibt die Richtung an: für einen Abbiegevorgang (oder Spurwechselvorgang) nach rechts ist P positiv, und für einen Abbiegevorgang (oder Spurwechselvorgang) nach links ist P negativ.

Wenn eine solche Beziehung für die Abbiegewahrscheinlichkeit P im Fahrerassistenzsystem 12 gespeichert ist, so kann ein Abbiegevorgang frühzeitig erkannt werden, nämlich sobald die Differenz $v_{rL}$ $v_{rR}$ einen bestimmten Schwellenwert überschreitet. Gegebenenfalls kann die in Fig. 4 gezeigte Abbiegewahrscheinlichkeit P auch mit anderen Wahrscheinlichkeitsparametern kombiniert werden, die auf anderen Kriterien beruhen, oder anhand anderer Kriterien, etwa dem Vorhandensein einer Abbiegemöglichkeit, die anhand der digitalen Straßenkarte eines Navigationssystems erkannt wird, kann der Schwellenwert für die Erkennung eines Abbiegevorgangs variiert werden.

**Patentansprüche**

1. Verfahren zur Bestimmung einer für eine Querbewegung eines georteten Objekts (16; 22) repräsentativen dynamischen Größe ($v_y$; $\omega$; P) in einem Fahrerassistenzsystem (12) für Kraftfahrzeuge (10), das zur Ortung des Objekts zwei seitlich versetzt zueinander angeordnete winkelauflösende Abstandssensoren (14L, 14R) aufweist, mit denen auch eine Radialkomponente ($v_{rL}$, $v_{rR}$) der Relativgeschwindigkeit des Objekts (16; 22) längs des jeweiligen Sehstrahls (20L, 20R) meßbar ist, bei dem die dynamische Größe ($v_y$; $\omega$; P) anhand der von den beiden Abstandssensoren (14L, 14R) gemessenen Radialkomponenten ($v_{rL}$, $v_{rR}$) der Relativgeschwindigkeit berechnet wird und bei dem anhand der von den beiden Abstandssensoren (14L, 14R) gemessenen Azimutwinkel ($\alpha$, $\beta$) zwischen annähernd punktförmigen Objekten (16) und ausgedehnten Objekten (22) unterschieden wird, **dadurch gekennzeichnet, daß** das Verfahren zur Berechnung der dynamischen Größe in Abhängigkeit von diesem Objekttyp gewählt wird und daß für ausgedehnte Objekte (22) anhand der von den Abstandssensoren (14L, 14R) gelieferten Abstands- und Azimutwinkeldaten die Positionen zweier Reflexpunkte (24, 26) in einem zweidimensionalen x-y-Koordinatensystem bestimmt werden, der Abstand zwischen diesen Reflexpunkten (24, 26) berechnet wird, und anhand der Differenz der für diese Reflexpunkte (24, 26) gemessenen Radialkomponenten ($v_{rL}$, $v_{rR}$) der Relativgeschwindigkeit die Giergeschwindigkeit ($\omega$) des Objekts (22) berechnet wird.

2. Verfahren nach Anspruch 1, **dadurch gekennzeichnet, daß** die Differenz ($v_{rL}$ - $v_{rR}$) der Radialkomponenten der Relativgeschwindigkeit gemessen wird und anhand einer fest im Navigationssystem (12) vorgegebenen Beziehung zwischen dieser Differenz und der Wahrscheinlichkeit eines Abbiege-oder Spurwechselvorgangs des Objekts (16; 22) ein Wahrscheinlichkeitsparameter (P) bestimmt wird, der diese Wahrscheinlichkeit angibt.

3. Fahrerassistenzsystem für Kraftfahrzeuge (10), mit zwei seitlich versetzt zueinander am Fahrzeug angeordneten winkelauflösenden Abstandssensoren (14L, 14R), **dadurch gekennzeichnet, daß** es zur Ausführung des Verfahrens nach einem der vorstehenden Ansprüche ausgebildet ist.

**Claims**

1. Method for determining a dynamic variable ($v_y$; $\omega$; P), representative of a lateral movement of a located object (16; 22), in a driver assistance system (12) for motor vehicles (10), which method has, for the purpose of locating the object, two angle-resolving distance sensors (14L, 14R) which are arranged laterally offset from one another and with the aid of which it is also possible to measure a radial component ($v_{rL}$, $v_{rR}$) of the relative speed of the object (16; 22) along the respective viewing beam (20L, 20R), in the case of which the dynamic variable ($v_y$; $\omega$; P) is calculated with radial components ($v_{rL}$, $v_{rR}$), measured by the two distance sensors (14L, 14R), of the relative speed, and in the case of which a distinction is made between approximately punctiform objects (16) and extended objects (22) with the aid of the azimuth angle ($\alpha$, $\beta$) measured by two distance sensors (14L, 14R), **characterized in that** the method for calculating the dynamic variable is selected as a function of this object type, and **in that** for extended objects (22) the positions of two reflection points (24, 26) in a two-dimensional x-y coordinate system is determined with the aid of the data on distance and azimuth angle supplied by the distance sensors (14L, 14R), the distance between these reflection points (24, 26) is calculated, and the yaw velocity ($\omega$) of the object (22) is calculated with the aid of the difference of the radial components ($v_{rL}$, $v_{rR}$), measured for these reflection points (24, 26), of the relative velocity.

2. Method according to Claim 1, **characterized in that** the difference ($v_{rL}$, $v_{rR}$) of the radial components of the relative velocity is measured, and a relationship, permanently prescribed in the navigation system (12), between this difference and the probability of a turn-off or lane-change manoeuvre by the object (16; 22) is used to determine a probability parameter (P) which specifies this probability.

3. Driver assistance system for motor vehicles (10), having two angle-resolving distance sensors (14L, 14R) arranged laterally offset from one another on the vehicle, **characterized in that** it is designed to execute the method according to one of the preceding claims.

**Revendications**

1. Procédé de détermination d'une grandeur dynamique ($v_y$; $\omega$; P) qui représente le déplacement transversal d'un objet (16; 22) localisé dans un système (12) d'assistance au conducteur de véhicules automobiles (10), qui présente pour la localisation de l'objet deux détecteurs de distance (14L, 14R) à résolution angulaire disposés en décalage latéral l'un par rapport à l'autre et qui permettent également de mesurer une composante radiale ($v_{rL}$, $v_{rR}$) de la vitesse relative de l'objet (16; 22) le long de faisceaux de vision (20L, 20R) respectifs,
dans lequel la grandeur dynamique ($v_y$; $\omega$; P) est calculée à l'aide des composantes radiales ($v_{rL}$, $v_{rR}$) de la vitesse relative, mesurées à l'aide des deux détecteurs de distance (14L, 14R),
et dans lequel des objets sensiblement ponctuels (16) sont distingués d'objets étendus (22) à l'aide de l'angle d'azimut ($\alpha$, $\beta$) mesuré par les deux détecteurs de distance (14L, 14R),
**caractérisé en ce que**

le procédé est sélectionné pour calculer la grandeur dynamique en fonction de ce type d'objet,

**en ce que** pour des objets étendus (22), la position de deux points réfléchissants (24, 26) est déterminée dans un système bidimensionnel de coordonnées x-y à l'aide des données de distance et d'angle d'azimut délivrées par les détecteurs de distance (14L, 14R),

**en ce que** la distance entre ces points réfléchissants (24, 26) est calculée et

**en ce que** la vitesse de lacet ($\omega$) de l'objet (22) est calculée à l'aide de la différence entre les composantes ($v_{rL}$, $v_{rR}$) de la vitesse relative mesurées pour ces points réfléchissants (24, 26).

2. Procédé selon la revendication 1, **caractérisé en ce que** la différence ($v_{rL} - v_{rR}$) entre les composantes radiales de la vitesse relative est mesurée et **en ce qu'**à l'aide d'une relation prédéterminée de manière fixe dans le système de navigation (12) entre cette différence et la probabilité que l'objet (16; 22) exécute une manoeuvre de virage ou de changement de voie de circulation, un paramètre de probabilité (P) qui indique cette probabilité est déterminé.

3. Système d'assistance au conducteur pour véhicules automobiles (10), qui présente deux détecteurs de distance (14L, 14R) à résolution angulaire disposés en décalage latéral mutuel sur le véhicule, **caractérisé en ce qu'**il est configuré pour exécuter le procédé selon l'une des revendications précédentes.

**Fig. 1**

Fig. 2

**Fig. 3**

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19949409 A1
- DE 102004028822 A1
- US 5314037 A